Europäisches Patentamt

European Patent Office

Office européen des brevets

(19)

(11) Veröffentlichungsnummer: **0 031 400**
**B1**

# EUROPÄISCHE PATENTSCHRIFT

(45) Veröffentlichungstag der Patentschrift:
23.01.85

(21) Anmeldenummer: 80105699.5

(22) Anmeldetag: 23.09.80

(51) Int. Cl.⁴: **B 60 R 16/02,** B 60 Q 1/00

(54) Energieversorgungsanlage, insbesondere in einem Nutzfahrzeug.

(30) Priorität: 24.09.79 IT 6885479

(43) Veröffentlichungstag der Anmeldung:
08.07.81 Patentblatt 81/27

(45) Bekanntmachung des Hinweises auf die Patenterteilung:
23.01.85 Patentblatt 85/4

(84) Benannte Vertragsstaaten:
DE FR GB

(56) Entgegenhaltungen:
DE - A - 1 900 872
DE - A - 1 937 085
DE - A - 2 240 958
DE - A - 2 323 620
DE - A - 2 724 759

(73) Patentinhaber: FIAT Veicoli Industriali S.p.A., Via
Puglia 35, I-10100 Turin (IT)

(72) Erfinder: Margaira, Rinaldo, Via Bernardo de Canal 59/a,
Torino (IT)
Erfinder: Raineri, Carlo, Via Vaigioie 86, Torino (IT)
Erfinder: Gheddo, Carlo, Via Romita 3/b, I-10137 Torino
(IT)
Erfinder: Gai, Giacomo, Via Beaulard 56, Torino (IT)

(74) Vertreter: Socha, Peter, Iveco Magirus AG
Postfach 2740 Schillerstrasse 2, D-7900 Ulm (DE)

**Beschreibung** ·

Die Erfindung bezieht sich auf eine Energieversorgungsanlage, insbesondere in einem Nutzfahrzeug, welches eine elektrische Versorgungsquelle, mehrere an verschiedenen Stellen des Fahrzeuges befindliche Stromverbraucher und ein System zur gesteuerten Verteilung der elektrischen Energie von der elektrischen Versorgungsquelle bis zu den Stromverbrauchern besitzt, wobei das System eine zentrale im Fahrerhaus angeordnete Verbundeinheit mehrere Betätigungselemente, die durch am Armaturenbrett angeordnete Bedienungsschalter gesteuert werden sowie durch die obengenannte Verbundeinheit versorgte Verteilungsmittel umfaßt, die die Stromverbraucher versorgen, die Verteilungsmittel aus zwei Abzweigdosen bestehen, von denen die eine am Fahrzeug-Vorderteil und die andere an einem weiter hinten befindlichen Fahrzeugteil angeordnet sind, beide Abzweigdosen über erste Leitungen mit der zentralen Verbundeinheit und über zweite Leitungen mit den entsprechenden Stromverbrauchern verbunden sind, die am Fahrzeug-Vorderteil angeordnete Abzweigdose die vordere Außenbeleuchtung und gegebenenfalls einen Teil anderer Fahrzeug-Verbraucher und die am weiter hinten befindlichen Fahrzeugteil angeordnete Abzweigdose die hintere Außenbeleuchtung und gegebenenfalls den restlichen Teil der anderen Fahrzeugverbraucher versorgt.

Eine Energieversorgungsanlage der vorstehend beschriebenen Gattung ist aus der DE-A-1 937 085 grundsätzlich bekannt. Bezüglich des genauen Aufbaus der Abzweigdosen gehen aus der genannten Druckschrift keine Einzelheiten hervor. Es ist jedoch davon auszugehen, daß es sich dabei um übliche Mehrfach-Abzweigdosen handelt, in welche für den Anschluß der Leitungsbündel zu den verschiedenen Stromverbrauchern entsprechende Mehrfachstecker eingesteckt werden. Dies bedeutet, daß bei verschiedenen Fahrzeugtypen mit unterschiedlicher Anzahl und Art von Stromverbrauchern in aufwendiger Weise jeweils unterschiedliche Leitungsbündel mit zugehörigen entsprechend unterschiedlichen Mehrfachsteckern vorzusehen sind. Im übrigen sind bei der bekannten Energieversorgungsanlage die ersten Leitungen, die die Abzweigdosen mit der zentralen Verbundeinheit verbinden, in aufwendiger Weise über einen Teil ihrer Länge durch mehrere gesonderte Einzelleitungen gebildet.

Der vorliegenden Erfindung liegt die Aufgabe zugrunde, eine einfache und wirksame Energieversorgungsanlage zu schaffen, welche gegenüber der bekannten Energieversorgungsanlage einen verringerten Bau- und Montageaufwand ergibt und eine Reduzierung des Aufwandes für die Lagerhaltung ermöglicht.

Diese Aufgabe wird bei einer Energieversorgungsanlage der eingangs erwähnten Gattung erfindungsgemäß dadurch gelöst, daß beide Abzweigdosen mehrere übereinanderliegende Leiterplatten umfassen, die in einem Isolierstoffträger eingebettet sind, und die jeweils an ersten Anschlußklemmen der Abzweigdosen angeschlossenen ersten Leitungen, die beide Abzweigdosen mit der zentralen Verbundeinheit verbinden, jeweils über ihre gesamte Länge in einem einzigen Kabel enthalten sind. Dabei ist gemäß einer weiteren ganz besonders vorteilhaften Ausbildung der Erfindung jede der jeweils an zweiten Anschlußklemmen der Abzweigdosen angeschlossenen zweiten Leitungen durch einen Schlauch umhüllt, der zumindest an seinen beiden Endstücken eine gewellte Außenfläche aufweist, die in einem entsprechenden Endstück eines Elastomer-Schlauches an dessen Innenseite dicht anliegt, und dessen entgegengesetztes Endstück an der entsprechenden Abzweigdose bzw. an den zugeordneten Stromverbraucher an der Verbindungsstelle dicht und abbaubar angeschlossen ist.

Bei Vorhandensein eines am hinteren Schlußteil des Nutzfahrzeuges angeordneten Unterfahrschutzes, der eine elektrische Schaltung zur Versorgung der hinteren Außenbeleuchtung besitzt, sind mit Vorteil die Leitungen, die die am weiter hinten befindlichen Fahrzeugteil angeordnete Abzweigdose mit der elektrischen Schaltung der hinteren Außenbeleuchtung verbinden, in einem einzigen Kabel enthalten.

Die Erfindung ermöglicht mit besonders einfachen Mitteln eine Lösung der gestellten Aufgabe. Insbesondere ermöglicht die Erfindung in vorteilhafter Weise eine witterungsbeständige Verkabelung nach dem Baukastensystem, wobei die einzelnen Stromverbraucher bzw. -verbrauchergruppen mit den Abzweigdosen jeweils durch vereinheitlichte Streckvorrichtungen verbunden werden. Hierdurch ergeben sich eine Rationalisierung bei der Herstellung der Verkabelung, eine leichtere Kabelverlegung an der Montagestraße bei Verhinderung von Verbindungsfehlern sowie eine beträchtliche Verringerung des Aufwandes für die Lagerhaltung, wobei sich auch eine besonders einfache und kostengünstige Möglichkeit ergibt, die einzelnen Verkabelungs-Bausteine als Ersatzteile anzuliefern. Es versteht sich, daß auch bei unterschiedlichen Fahrzeugtypen jeweils dieselben Abzweigdosen verwendbar sind, wobei lediglich je nach Bedarf mehr oder weniger Stromverbraucher bzw. -verbrauchergruppen einzeln an die Abzweigdosen angeschlossen werden.

Die Erfindung wird nachstehend anhand eines in der Zeichnung schematisch dargestellten Ausführungsbeispiels näher veranschaulicht. Es zeigt

Fig. 1 ein Schema einer Energieversorgungsanlage eines Nutzfahrzeugs nach der Erfindung und

Fig. 2 in vergrößertem Maßstab ein Bauteil der in Fig. 1 dargestellten Anlage in teilweise geschnittener Seitenansicht.

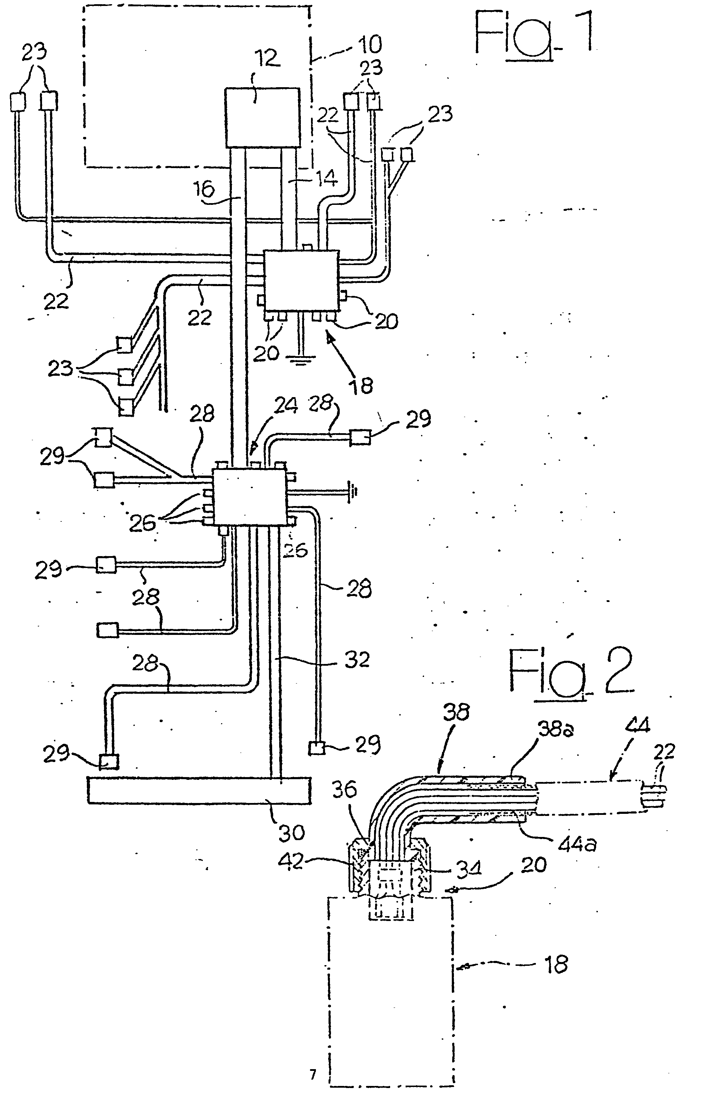

Das in Fig. 1 dargestellte Schema zeigt eine Energieversorgungsanlage in einem Nutzfahrzeug. Dieses Nutzfahrzeug kann z. B. ein Lastwagen mit Anhänger sein. In diesem Bild ist das Fahrerhaus schematisch durch 10 dargestellt. Innerhalb des Fahrerhauses 10 ist eine zentrale Verbundeinheit 12 angeordnet, die auf eine für sich bekannte Weise mehrere Betätigungselemente umfaßt. Diese können z. B. nicht dargestellte Fernschalter sein. Die Betätigungselemente der Verbundeinheit 12 werden auf eine für sich bekannte Weise durch nicht dargestellte Bedienungsschalter gesteuert, die sich am Armaturenbrett des Fahrerhauses 10 befinden.

Zur Verbundeinheit 12 führt ein Bündel erster Leitungen 14, die in einem einzigen Kabel enthalten sind, und ein Bündel erster Leitungen 16, die ebenfalls in einem einzigen Kabel enthalten sind. Die Leitungen des Bündels 14, die wesentlich kürzer als die Leitungen des Bündels 16 sind, führen zu den entsprechenden Anschlußklemmen, die in einer am Fahrzeugrahmen-Vorderteil befestigten Abzweigdose 18 angeordnet sind. Die Klemmen für die Leitungen 14, die — auf eine für sich bekannte Weise — aus Steckgehäusen mit Flachsteckern bestehen, sind mit entsprechenden Klemmen 20, die ebenfalls aus Steckgehäusen mit Flachsteckern bestehen, zur Verbindung mit einem Teil der Fahrzeugverbraucher verbunden. Die Verbindungen zwischen den Klemmen für die Leitungen 14 und den Klemmen 20 werden durch mehrere — für sich bekannte und in den Zeichnungen nicht dargestellte übereinanderliegende Leiterplatten durchgeführt, die in einem in der Abzweigdose 18 angeordneten Isolierstoffträger eingebettet sind.

Die Klemmen 20 sind — auf die nachstehend beschriebne Weise — mit entsprechenden Leitungen 22 verbunden, deren Endverschlüsse je mit einer entsprechenden Klemme eines Stromverbrauchers 23 verbunden sind. Die durch die Abzweigdose 18 versorgten Stromverbraucher umfassen die vordere Außenbeleuchtung des Fahrzeuges, die Signalhörner und die mit dem Fahrzeugmotor vereinigten Verbraucher. Außerdem ist die Abzweigdose 18 mit weiteren Klemmen 20 versehen, die für die eventuellen auf Wunsch gelieferten Stromverbraucher bestimmt sind.

Die Leitungen des Bündels 16 führen zu den entsprechenden Klemmen einer zweiten Abzweigdose 24, die am mittleren Teil des Fahrzeugrahmens angeordnet ist. Die Abzweigdose 24 ist der Abzweigdose 18 völlig ähnlich und ist mit Klemmen 26 zur Verbindung der Leitungen 28 versehen, deren Endanschlüsse mit den Klemmen 26 und die Klemmen für die Leitungen 16 bestehen ebenfalls aus Steckgehäusen mit Flachsteckern und sind durch entsprechende übereinanderliegende Leiterplatten, die in einem in der Abzweigdose 24 angeordneten Isolierstoffträger eingebettet sind, miteinander verbunden.

Die Stromverbraucher, die durch die Leitungen 28 von der Abzweigdose 24 versorgt werden, umfassen die hintere Außenbeleuchtung des Lastwagens und des Anhängers sowie die Verbraucher, die mit dem Getriebe und den übrigen mechanischen Aggregaten vereinigt sind. Auch die Abzweigdose 24 ist mit weiteren Klemmen 26 versehen, die zur Verbindung mit eventuellen nach Wunsch gelieferten Verbrauchern bestimmt sind. Für den besonderen Fall, daß das Fahrzeug einen Unterfahrschutz 30 einer für sich bekannter Art besitzt, der mit einer nicht dargestellten Leiterplatte zur Versorgung der hinteren Außenbeleuchtung versehen ist, ist diese Leiterplatte mit der mittleren Abzweigdose 24 durch ein Bündel von Leitungen 28, die in einem einzigen Kabel 32 enthalten sind, verbunden.

In Bild 2 ist ein Beispiel einer Verbindung zwischen der vorderen Abzweigdose 18 und einem Bündel von Leitungen 22 eingehend dargestellt. Diese Verbindung ist identisch mit derjenigen der Leitungen 22 und den entsprechenden Verbrauchern sowie den Leitungen 28 und der mittleren Abzweigdose 24 oder den entsprechenden Verbrauchern. Ist eine einzelne Leitung statt ein Bündel — wie dargestellt — angeschlossen, so bleibt die genannte Verbindung ebenfalls identisch.

Wie oben bereits ausgeführt, besteht die Anschlußklemme 20 aus einem Steckgehäuse mit Flachsteckern. Sie umfaßt einen zylindrischen Rohrzapfen 34, der aus der Abzweigdose 18 hervorragt. Auf der Endfläche des Rohrzapfens 34 liegt ein ringförmiger Außenflansch 36 eines Elastomer-Schlauches 38 stirnseitig auf.

Der ringförmige Flansch 36 ist gegen den Rand des Rohrzapfens 34 durch eine Mutter 34 dicht angezogen. Diese Mutter weist ein Innengewinde auf, das in einem entsprechenden Außengewinde des Zapfens 34 zusammengefügt ist.

An der Innenseite des Schlauches 38 und am Endstück 38a des Schlauches 38 liegt dicht ein Endstück 44a eines gewellten Schlauches 44 an, in dem die Leitungen 22 enthalten sind. Die Endanschlüsse der Leitungen 22 treten aus dem Endstück 44a des Schlauches 44 heraus, gehen durch den Elastomer-Schlauch 38 hindurch und sind mit der entsprechenden Klemme 20 verbunden. Dadurch wird eine wirksame Abdichtung der elektrischen Verbindungen zwischen den Leitungen 22 und der Abzweigdose 18, bzw. zwischen den Leitungen 22 und den entsprechenden Verbrauchern sowie zwischen den Leitungen 28 und der Abzweigdose 24 und den entsprechenden Verbrauchern gewährleistet.

## Patentansprüche

1. Energieversorgungsanlage, insbesondere in einem Nutzfahrzeug, welches eine elektrische Versorgungsquelle, mehrere an verschiedenen Stellen des Fahrzeuges befindliche Stromverbraucher (23, 29), und ein System zur gesteuerten Verteilung der elektrischen Energie von der elektrischen Versorgungsquelle bis zu den Stromverbrauchern (23, 29) besitzt, wobei das System eine zentrale im Fahrerhaus (10) angeordnete Verbundeinheit (12), mehrere Betätigungselemente, die durch am Armaturenbrett angeordnete Bedienungsschalter gesteuert werden sowie durch die obengenannte Verbundeinheit (12) versorgte Verteilungsmittel umfaßt, die die Stromverbraucher (23, 29) versorgen, die Verteilungsmittel aus zwei Abzweigdosen (18, 24) bestehen, von denen die eine am Fahrzeug-Vorderteil und die andere an einem weiter hinten befindlichen Fahrzeugteil angeordnet sind, beide Abzweigdosen (18, 24) über erste Leitungen (14, 16) mit der zentralen Verbundeinheit (12) und über zweite Leitungen (22, 28) mit den entsprechenden Stromverbrauchern (23, 29) verbunden sind, die am Fahrzeug-Vorderteil angeordnete Abzweigdose (18) die vordere Außenbeleuchtung und gegebenenfalls einen Teil anderer Fahrzeug-Verbraucher (23) und die am weiter hinten befindlichen Fahrzeugteil angeordnete Abzweigdose (24) die hintere Außenbeleuchtung und gegebenenfalls den restlichen Teil der anderen Fahrzeugverbraucher (29) versorgt, dadurch gekennzeichnet, daß beide Abzweigdosen (18, 24) mehrere übereinanderliegende Leiterplatten umfassen, die in einem Isolierstoffträger eingebettet sind, und die jeweils an ersten Anschlußklemmen der Abzweigdosen (18, 24) angeschlossenen ersten Leitungen (14, 16), die beide Abzweigdosen (18, 24) mit der zentralen Verbundeinheit (12) verbinden, jeweils über ihre gesamte Länge in einem einzigen Kabel enthalten sind.

2. Energieversorgungsanlage nach Anspruch 1, dadurch gekennzeichnet, daß jede der jeweils an zweiten Anschlußklemmen (20, 26) der Abzweigdosen (18, 24) angeschlossenen zweiten Leitungen (22, 28) durch einen Schlauch (44) umhüllt ist, der zumindest an seinen beiden Endstücken (44a) eine gewellte Außenfläche aufweist, die in einem entsprechenden Endstück (38a) eines Elastomer-Schlauches (38) an dessen Innenseite dicht anliegt, und dessen entgegengesetztes Endstück an der entsprechenden Abzweigdose (18, 24) bzw. an den zugeordneten Stromverbraucher (23, 29) an der Verbindungsstelle dicht und abbaubar angeschlossen ist.

3. Energieversorgungsanlage nach einem der Ansprüche 1 oder 2, mit einem am hinteren Schlußteil des Nutzfahrzeuges angeordneten Unterfahrschutz (30), der eine elektrische Schaltung zur Versorgung der hinteren Außenbeleuchtung besitzt, dadurch gekennzeichnet, daß die Leitungen (28), die die am weiter hinten befindlichen Fahrzeugteile angeordnete Abzweigdose (24) mit der elektrischen Schaltung der hinteren Außenbeleuchtung verbinden, in einem einzigen Kabel (32) enthalten sind.

**Claims**

1. Energy supply equipment, particularly that in a commercial vehicle equipped with a source of electric power supply, a number of current-consuming devices (23, 29) disposed at different points of the vehicle and with a system for the controlled distribution of the electric power from the electric power source to the consuming devices (23, 29), in which the system includes: a compound-operation unit (12) arranged in the vehicle's cab (10); a number of actuators controlled by operating switches mounted on the dash-board; and distributing means supplied by the aforesaid compound-operation unit (12) and supplying the consuming devices (23, 29); in which the distributing means are two junction boxes (18, 24) one of which is disposed in the front portion of the vehicle and the other one in a more rearwardly located vehicle portion, the two junction boxes (18, 24) both being connected by respective first conductors (14, 16) to the central compound-operation unit (12) and by respective second conductors (22, 28) to the respective consuming devices (23, 29) in which the junction box (18) disposed in the front portion of the vehicle carries electric current to the external lighting installation arranged at the front of the vehicle and, possibly, to some other consuming devices (23) thereof whilst the junction box (24) disposed in the more rearwardly located vehicle portion carries the current to the external lighting installation arranged at the rear of the vehicle and, possibly, to the other remaining consuming devices (29) of the vehicle, characterized in that each of the junction boxes (18, 24) comprises a plurality of superposed printed circuit boards embedded in an insulant carrier, and in that the first conductors (14, 16) which are connected to first terminals in the respective juction boxes (18, 24) and which connect each of the two boxes (18, 24) to the compound-operation unit (12) are each contained, over their entire length, in a respective single cable.

2. Energy supply equipment according to claim 1, characterized in that each of the second conductors (22, 28) connected to second terminals (20, 26) in the respective junction boxes (18, 24) is enclosed by a sheath (44) at least the two end portions (44a) of which have a corrugated external surface, one of the end portions abutting tightly against the internal surface of a corresponding end portion (38a) of an elastomer sheath (38) and the other, opposite, end portion being tightly yet removably connected to the connecting point of the respective junction box (18, 24) or of the respective consuming device (23, 29).

3. Energy supply equipment according to claim 1 or claim 2, including a lower guard (30) arranged at the tail end of the commercial vehicle and being provided with an electric circuit for supplying the rear external lighting installation, characterized in that the conductors (28) connecting the junction box (24) disposed in the more rearwardly located vehicle portion to the electric circuit of the rear external lighting installation are contained in a single cable (32).

## Revendications

1. Installation d'alimentation en énergie notamment pour un véhicule utilitaire qui comporte une source d'alimentation électrique, plusieurs consommateurs de courant (23, 29) se trouvant aux différents endroits du véhicule et un système pour la répartition commandée de l'énergie électrique de la source d'alimentation électrique aux consommateurs de courant (23, 29), le système ayant une unité de combinaison (12) située au centre du véhicule avec plusieurs éléments de commande qui sont commandés par des commutateurs de manoeuvre prévus sur le tableau de bord, ainsi que des moyens de répartition alimentés par l'unité combinée (12) mentionée ci-dessus, pour alimenter les consommateurs de courant (23, 29), les moyens de répartition se composant de deux boîtes de dérivation (18, 24) dont l'une est prévue dans la partie avant du véhicule et l'autre dans une partie du véhicule située plus à l'arrière, les deux boîtes de dérivation (18, 24) étant reliées à l'unité combinée, centrale (12), par des premières lignes (14) alors que les secondes lignes (16) la relient aux consommateurs de courant (23, 29) correspondants, la boîte de dérivation prévue dans la partie avant du véhicule alimentant l'éclairage extérieur avant et le cas échéant une partie d'autres consommateurs du véhicule et la boîte de dérivation dans la partie du véhicule se trouvant plus à l'arrière, alimentant l'éclairage extérieur arrière et le cas échéant la partie restante des autres consommanteurs du véhicule, caractérisée en ce que les deux boîtes de dérivation (18, 24) comportend plusieurs plaques conductrices superposées qui sont noyées dans un support de matière isolante, et les premières lignes (14, 16) qui sont respectivement raccordées aux premières bornes de raccordement de la boîte de dérivation (18, 24), qui relient les deux boîtes de dérivation (18, 24) à l'unité composée centrale (12) sont chaque fois comprises dans un seul câble sur toute leur longueur.

2. Installation d'alimentation en énergie selon la revendication 1, caractérisée en ce que chacune des secondes lignes (22, 28) reliées à chacune des secondes bornes de branchement (20, 26) des boîtes de dérivation (18, 24) sont entourées par un tube (44) ayant au moins au niveau de ses deux extrémités (44a), une surface extérieure ondulée, qui s'applique étroitement dans une pièce d'extrémité correspondante (38a) d'un tuyau en élastomère (38) contre sa face intérieure, et dont la pièce d'extrémité, opposée est appliquée étroitement contre la boîte de dérivation correspondante (18, 24) ou le consommateur de courant correspondant (23, 29), au niveau de la zone de jonction et peut être dévissée.

3. Installation d'alimentation en énergie selon l'une des revendications 1 ou 2 avec une protection arrière (30), prévue au niveau de l'extrémité arrière du véhicule utilitaire, et qui comporte un circuit électrique pour l'alimentation de l'éclairage extérieur arrière, caractérisée en ce que les lignes (28) qui relient la boîte de dérivation (24) qui se trouve au point le plus à l'arrière du véhicule, relient cette boîte aux circuits électriques de l'éclairage arrière, et qui contient certains câbles (32).

0 031 400

Fig. 1

Fig. 2